# EUROPEAN PATENT SPECIFICATION

(11) **EP 2 187 664 B1**
(45) Date of publication and mention of the grant of the patent: **25.06.2014**
(21) Application number: 08783921.3
(22) Date of filing: 07.08.2008
(51) Int. Cl.: H04W 36/02

(54) **DATA FORWARDING METHOD, EVOLVED NODEB AND LONG TERM EVOLUTION NETWORK**
DATENWEITERLEITUNGSVERFAHREN, ENODEB UND LANGZEITENTWICKLUNGSNEZTZWERK
PROCÉDÉ DE RÉACHEMINEMENT DE DONNÉES, NOEUD B ÉVOLUÉ ET RÉSEAU D'ÉVOLUTION À LONG TERME

(30) Priority: 09.08.2007 CN 200710044812; 22.08.2007 CN 200710145107
(43) Date of publication of application: 19.05.2010
(60) Divisional application: 14168825.9
(73) Proprietor: Huawei Technologies Co., Ltd., Longgang District, Shenzhen Guangdong 518129 (CN)
(72) Inventor: QIU, Yong, Guangdong 518129 (CN); HUANG, Min, Guangdong 518129 (CN); HUANG, Ying, Guangdong 518129 (CN)
(74) Representative: Isarpatent
(86) International application number: PCT/CN2008/071928
(87) International publication number: WO 2009/018784

(56) References cited:
- WO-A1-2007/076729
- WO-A1-2007/077523
- CN-A- 1 937 547
- MITTS H ET AL: "Lossless handover for wireless ATM", MOBILE NETWORKS AND APPLICATIONS, ACM, NEW YORK, NY, US, vol. 1, no. 3, 1 December 1996 (1996-12-01), pages 299-312,ABSTRA, XP002120628, ISSN: 1383-469X, DOI: DOI:10.1007/BF01193263
- "Evolved Universal Terrestrial Radio Access (E-UTRA) and Evolved Universal Terrestrial Radio Access Network (E-UTRAN), 3GPP Technical Specification Group Radio Access Network", 3GPP TS 36.300 V8.1.0,, 1 June 2007 (2007-06-01), pages 1-106, XP008126757,
- 'Evolved Universal Terrestrial Radio Access (E-UTRA) and Evolved Universal Terrestrial Radio Access Network (E-UTRAN), 3GPP Technical Specification Group Radio Access Network' 3GPP TS 36.300 V8.1.0 June 2007, XP008126757

## Description

### FIELD OF THE TECHNOLOGY

The present invention relates to the field of mobile communications, and more particularly to a data forwarding method, an evolved NodeB, and a long term evolution network during handover procedure.

### BACKGROUND OF THE INVENTION

A long term evolution (LTE) network includes a core network equipment and evolved NodeBs (eNBs). The core network equipment includes mobility management entities (MMEs) and serving gateways (SGWs). The MME belonging to a control plane is responsible for the mobility management of the control plane, including user context and moving state management and user temporary identity assignment. The SGW belonging to a user plane is responsible for initiating a paging for downlink data and managing and saving IP bearer parameters and network routing information in an idle state. The MMEs and the SGWs are connected in a mesh configuration, and one MME can control several SGWs. The core network equipment communicates with the eNBs via S1 interfaces, and the eNBs communicate with each other via X2 interfaces.

The handover between the eNBs without involving a core network (referred to as "X2 handover" for short) is a process in which a user equipment (UE) disconnects with a source eNB and connects with a target eNB. Before the handover, a measurement is performed, the source eNB interacts with the UE, and the source eNB receives a measurement report. The handover process includes three stages: a handover preparation stage, in which the source eNB interacts with the target eNB, and the source eNB sends a handover command to the UE upon receiving a handover request acknowledgement (Ack); a handover execution stage, in which the UE interacts with the target eNB, and the target eNB receives a handover confirm message (e.g. Handover Confirm) from the UE; and a handover completion stage, in which the target eNB interacts with the core network equipment, the target eNB sends a release resource message (e.g. Release Resource) to the source eNB upon receiving a response for handover completion (e.g. handover complete Ack), and the source eNB releases resources.

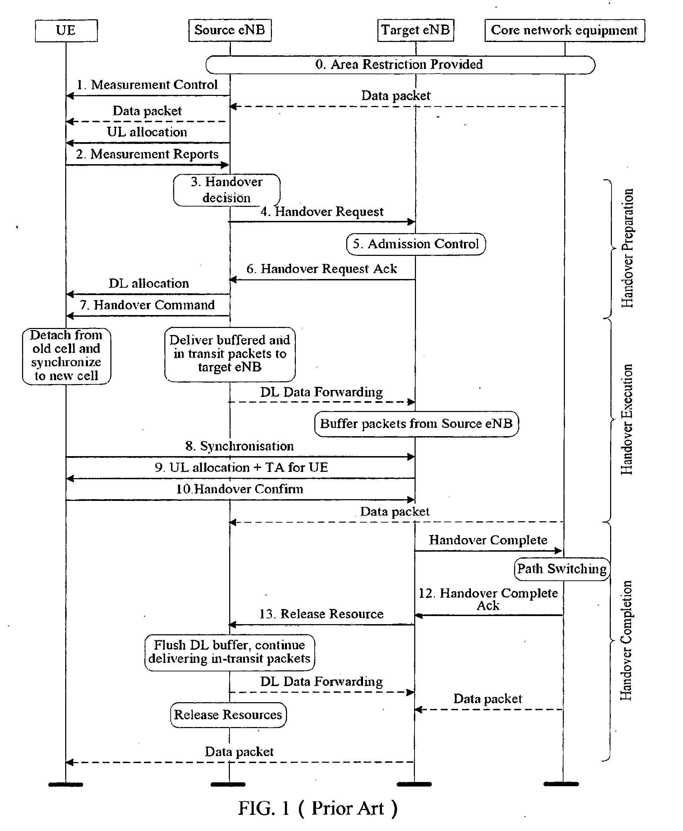

FIG. 1 is a flow chart of X2 handover in the prior art. The X2 handover includes the following stages.

The first stage is a measurement stage before handover.

In Block 1, the source eNB sends a measurement control message to the UE.

In Block 2, the UE sends a measurement reports message to the source eNB.

The second stage is a handover preparation stage.

In Block 3, the source eNB performs a handover decision.

In Block 4, the source eNB sends a handover request to the target eNB.

In Block 5, the target eNB performs an admission control.

In Block 6, the target eNB sends a response for the handover request (e.g. Handover Request Ack) to the source eNB.

In Block 7, the source eNB sends a handover command to the UE.

The third stage is a handover execution stage.

In Block 8, the UE sends a synchronization message to the target eNB.

In Block 9, the target eNB sends a message for allocating an uplink to the UE (e.g. UL allocation and Tracking Area for UE).

In Block 10, the UE sends a handover confirm message to the target eNB.

The fourth stage is a handover completion stage.

In Block 11, the target eNB sends a handover complete message to the SGW.

In Block 12, the SGW performs a path switching, and sends a response for the handover complete (e.g.Handover Complete Ack) to the target eNB.

In Block 13, the target eNB sends a release resource message to the source eNB.

In Block 14, the source eNB releases resources.

Before the handover completion stage, the SGW sends user data packets to the source eNB; and in the handover completion stage, the SGW sends user data packets to the target eNB after performing the path switching.

Before the handover execution stage, the source eNB directly sends user data packets delivered by the SGW to the UE. In the handover execution stage, the source eNB disconnects with the UE, the source eNB cannot directly send the user data packets delivered by the SGW to the UE, the source eNB forwards the user data packets delivered by the SGW to the target eNB via an X2 interface, and the target eNB sends X2-interface data packets forwarded by the source eNB (the user data packets forwarded between X2 interfaces of the eNBs are referred to as "X2-interface data packets" for short) to the UE upon receiving the handover confirm message from the UE. In the handover completion stage, the target eNB receives S1-interface data packets (the user data packets delivered by the SGW to the eNBs are referred to as "S1-interface data packets" for short), and to ensure the sequence of the user data packets received by the UE, the target eNB sends the S1-interface data packets after sending the X2-interface data packets.

In the prior art, during the X2 handover execution stage, the target eNB starts a timer after receiving the handover confirm message from the UE, then sends the X2-interface data packets before the timer expires, and sends the S1-interface data packets after the timer expires. In the X2 handover completion stage, the SGW adds an end marker to the last user data packet to be sent to the source eNB before performing the path switching, and then sends the user data packet with the end marker to the source eNB. The source eNB forwards the user data packet with the end marker to the target eNB. On receiving the user data packet with the end marker, the target eNB realizes that all the user data packets at the source eNB have already been sent out, and starts sending the S1-interface data packets after forwarding the user data packet with the end marker to the UE.

If the SGW does not need to send any user data packet to the source eNB, the source eNB will not receive the user data packet with the end marker, and the target eNB will not receive the user data packet with the end marker forwarded by the source eNB. Thereby, the target eNB is unable to figure out when the user data packets at the source eNB will be sent out, and has to wait for the timer to expire so as to send the S1-interface data packets. Therefore, the target eNB has a low user data packet forwarding efficiency in the X2 handover.

MITTS H ET AL: "Lossless handover for wireless ATM", 1 December 1996, describes a lossless handover for wireless ATM system.

3GPP TS 36.300 V8.1.0 "Evolved Universal Terrestrial Radio Access (E-UTRA) and Evolved Universal Terrestrial Radio Access Network (E-UTRAN); 3GPP Technical Specification Group Radio Access Network", 1 June 2007, describes an Intra-MME/Serving Gateway HO procedure.

### SUMMARY OF THE INVENTION

The embodiments of present invention provide a data forwarding method, an eNB, and a LTE network during handover, so as to improve the user data packet forwarding efficiency of a target eNB in an X2 handover.

One aspect of the present invention provides a data forwarding method in a handover completion stage between eNBs without involving a core network in a LTE network is provided. The method includes the following Blocks. A target eNB receives user data packets delivered by a SGW after the SGW performs a path switching, and forwards the user data packets delivered by the SGW to a UE upon receiving a special data packet with an end marker from a source eNB, where the special data packet dose not contain user data packets, the special data packet is generated by the SGW and sent to the source eNB after the SGW performs a path switching, and the end marker is set in a header of the special data packet to indicate the end of sending the user data packets.

One aspect of the present invention provides an LTE network including a UE, a source eNB, a target eNB, and an SGW is provided. The target eNB is configured, in a handover completion stage between the source eNB and the target eNB without involving a core network, to receive user data packets delivered by the SGW after the SGW performs a path switching, and forward the user data packets delivered by the SGW to the UE upon receiving a special data packet with an end marker sent by the source eNB, where the special data packet dose not contain user data packets, the special data packet is generated by the SGW and sent to the source eNB after the SGW performs a path switching, and the end marker is set in a header of the special data packet to indicate the end of sending the user data packets.

One aspect of the present invention provides an eNB, being a target eNB in a handover completion stage between a source eNB and the target eNB without involving a core network in a LTE network, including a user data packet receiving unit, a special data packet determining unit, and a user data packet sending unit is provided. The user data packet receiving unit is configured to receive user data packets delivered by a SGW. The special data packet determining unit is configured to determine whether a special data packet with an end marker is received, where the special data packet does not contain user data packets, the special data packet is generated by the SGW and sent to the source eNB after the SGW performs a path switching, and the end marker is set in a header of the special data packet to indicate the end of sending the user data packets. The user data packet sending unit is configured to send the user data packets delivered by the SGW received by the user data packet receiving unit to a UE when the special data packet determining unit determines that the special data packet with the end marker is received.

It can be seen from the above technical solutions that, during the handover without involving a core network, the target eNB does not need to wait for a timer to expire to forward the S1-interface data packets, thus improving the user data packet forwarding efficiency in the handover without involving a core network.

### BRIEF DESCRIPTION OF THE DRAWINGS

The present invention will become more fully understood from the detailed description given herein below for illustration only by referring to the accompanying drawings among which:
FIG. 1 is a simplified flow chart of an X2 handover in the prior art;
FIG. 2 is a simplified flow chart of a data forwarding method according to a first embodiment of the present invention;
FIG 3 is a simplified flow chart of a data forwarding method according to a second embodiment of the present invention;
FIG. 4 is a simplified flow chart of a data forwarding method according to a third example of the present invention;
FIG. 5 is a simplified flow chart of a data forwarding method according to a fifth example of the present invention;
FIG 6 is a simplified flow chart of a data forwarding method according to a sixth example of the present invention;
FIG. 7a is a simplified flow chart of a first manner for a target SGW to acquire a GTP_U sequence number of a next user data packet to be sent by a source SGW according to an eighth example of the present invention;
FIG. 7b is a simplified flow chart of a second manner for the target SGW to acquire the GTP_U sequence number of the next user data packet to be sent by the source SGW according to the eighth example of the present invention;
FIG 7c is a simplified flow chart of a third manner for the target SGW to acquire the GTP_U sequence number of the next user data packet to be sent by the source SGW according to the eighth example of the present invention;
FIG 7d is a simplified flow chart of a fourth manner for the target SGW to acquire the GTP_U sequence number of the next user data packet to be sent by the source SGW according to the eighth example of the present invention;
FIG. 8 is a simplified flow chart of a data forwarding method according to a tenth example of the present invention;
FIG 9 is a flow chart of restoring the sending of S1-interface data packets to a source eNB when an X2 handover fails according to the tenth example of the present invention;
FIG 10 is a simplified flow chart of an X2 handover according to an eleventh example of the present invention;
FIG. 11 is a simplified flow chart of a data forwarding method according to the eleventh example of the present invention;
FIG. 12 is a schematic structural view of an eNB according to a fourth embodiment of the present invention;
FIG. 13 is a schematic structural view of an eNB according to a seventh example of the present invention; and
FIG. 14 is a schematic structural view of an MME according to a ninth example of the present invention.

### DETAILED DESCRIPTION OF THE EMBODIMENTS

### [Embodiment 1]

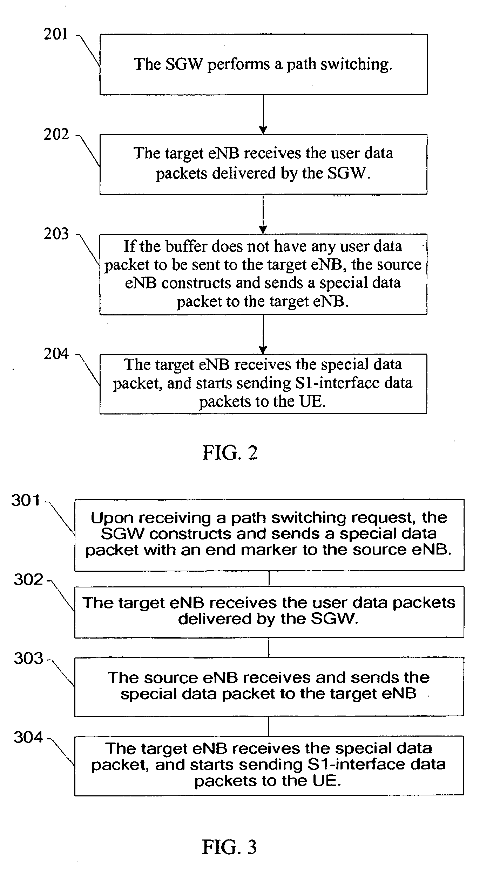

In this embodiment, during a handover completion stage of an X2 handover (specific stages of the X2 handover are divided in the same way as the background of the invention), a target eNB receives a special data packet generated by a source eNB, and accordingly determines when to forward user data packets delivered by an SGW to a UE (i.e., to forward S1-interface data packets). Referring to FIG 2, this embodiment mainly has the following Blocks.

In Block 201, the SGW performs a path switching.

In Block 202, the target eNB receives the user data packets delivered by the SGW.

In Block 203, after receiving a release resource message from the target eNB, if a data sending buffer of the source eNB does not have any user data packet to be sent to the target eNB, the source eNB generates and sends a special data packet with an end marker to the target eNB.

The special data packet with the end marker carries a Packet Data Convergence Protocol (PDCP) sequence number of a next data packet to be sent by the source eNB. The source eNB acquires a PDCP sequence number of a latest user data packet that has been sent according to the data sending buffer, and the acquired sequence number added by 1 is the PDCP sequence number of a next data packet to be sent by the source eNB. During the generation of the special data packet with the end marker, a certain byte of a header of the data packet is set to make the special data packet capable of indicating the end of the sending, i.e., indicating that the special data packet is the last data packet in the currently sent data packets. The special data packet does not contain user data, and the target eNB will not send the special data packet to the UE after receiving the special data packet.

**Table 1**

| | |
|---|---|
| Header | Data |

In Block 204, on receiving the special data packet with the end marker sent by the source eNB, the target eNB realizes that all the X2-interface data packets have already been sent out, and starts sending the user data packets delivered by the SGW to the UE.

The target eNB receives the special data packet with the end marker, and acquires a PDCP sequence number carried in the data packet. Before sending a first S1-interface user data packet, the target eNB calculates a PDCP sequence number of the user data packet to be sent to the UE according to the acquired PDCP sequence number of the special data packet, thus ensuring that the PDCP numbers received by the UE are consecutive.

Seen from the above technical solutions, when the data sending buffer does not have any user data packet, the source eNB generates and sends the special data packet with the end marker to the target eNB, so as to inform the target eNB that all the X2-interface data packets have been sent out. The target eNB receives the special data packet with the end marker, and sends the user data packets delivered by the SGW to the UE, that is, forwards the S1-interface data packets to the UE. Through the technical solutions of this embodiment, when the data sending buffer of the source eNB does not have any user data packet to be sent to the target eNB, the target eNB does not need to wait for a timer to expire to forward the S1-interface data packets, thus improving the user data packet forwarding efficiency in the X2 handover.

### [Embodiment 2]

In this embodiment, during a handover completion stage of an X2 handover (specific stages of the X2 handover are divided in the same way as the background of the invention), a target eNB receives a special data packet generated by a source eNB, and accordingly determines when to forward user data packets delivered by an SGW to a UE (i.e., to forward S1-interface data packets). Referring to FIG 3, this embodiment mainly has the following Blocks.

In Block 301, on receiving a path switching request, the SGW generates and sends a special data packet with an end marker to the source eNB.

The SGW sends the special data packet with the end marker to inform the source eNB that the sending of S1-interface data packets from the SGW to the source eNB in this X2 handover process is completed. The structure of the special data packet is the same as that in Embodiment 1, and the details will not be repeated herein. The special data packet with the end marker does not contain user data, and the target eNB will not send the special data packet with the end marker to the UE after receiving the same.

In Block 302, the target eNB receives the user data packets delivered by the SGW.

In Block 303, the source eNB receives and sends the special data packet with the end marker to the target eNB, so as to inform the target eNB that the forwarding of X2-interface data packets from the source eNB to the target eNB in this X2 handover process is completed.

In Block 304, after receiving a response for handover completion (e.g. handover complete Ack) from the SGW, if the target eNB receives the special data packet with the end marker sent by the source eNB, the target eNB realizes that all the X2-interface data packets have already been forwarded, and starts sending the user data packets delivered by the SGW to the UE.

Block 303 of this embodiment may be replaced by Block 3031 as follows.

In Block 3031, the source eNB regenerates a special data packet with an end marker according to the special data packet with the end marker sent by the SGW, and sends the regenerated special data packet with the end marker to the target eNB.

The special data packet with the end marker regenerated by the source eNB carries a PDCP sequence number of a next data packet to be sent by the source eNB. The source eNB acquires a PDCP sequence number of a latest user data packet that has been sent according to a data sending buffer, and the acquired sequence number added by 1 is the PDCP sequence number of a next data packet to be sent by the source eNB. The target eNB receives the special data packet with the end marker, and acquires the PDCP sequence number carried in the data packet. Before sending a first S1-interface user data packet, the target eNB calculates a PDCP sequence number of the user data packet to be sent to the UE according to the acquired PDCP sequence number of the special data packet, thus ensuring that the PDCP numbers received by the UE are consecutive.

Seen from the above technical solutions, in the X2 handover completion stage, the SGW generates and sends the special data packet with the end marker to inform the source eNB that all the data packets delivered by the SGW in this X2 handover process have been sent out. The source eNB sends the special data packet with the end marker to the target eNB, so as to inform the target eNB that all the user data packets forwarded via the X2 interfaces in this X2 handover process have been sent out. The target eNB receives the special data packet with the end marker, and sends the user data packets delivered by the SGW to the UE, that is, forwards the S1-interface data packets to the UE. Therefore, through the technical solutions of this embodiment, the target eNB does not need to wait for a timer to expire to forward the S1-interface data packets, thus improving the user data packet forwarding efficiency in the X2 handover.

### [Example 3]

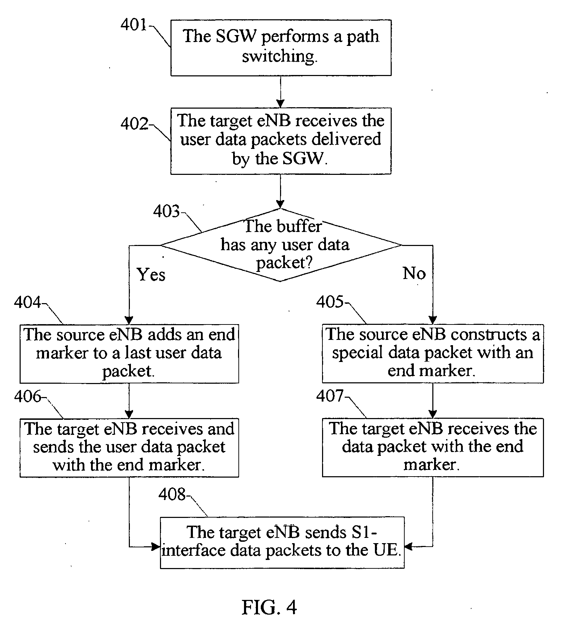

In this example, during a handover completion stage of an X2 handover (specific stages of the X2 handover are divided in the same way as the background of the invention), a target eNB receives a user data packet with an end marker or a special data packet generated by a source eNB, and accordingly determines when to forward user data packets delivered by an SGW to a UE (i.e., to forward S1-interface data packets). Referring to FIG. 4, this example mainly has the following Blocks.

In Block 401, the SGW performs a path switching.

In Block 402, the target eNB receives the user data packets delivered by the SGW

In Block 403, after receiving a release resource message from the target eNB, the source eNB determines whether a data sending buffer thereof has any user data packet to be sent to the target eNB, and if the data sending buffer has any user data packet to be sent to the target eNB, Block 404 is performed; if the data sending buffer dose not have any user data packet to be sent to the target eNB, Block 405 is performed.

In Block 404, the source eNB adds an end marker to a last user data packet in the user data packets, and sends the user data packet with the end marker to the target eNB. Afterward, Block 406 is performed.

In Block 405, the source eNB generates and sends a special data packet with an end marker to the target eNB. Afterward, Block 407 is performed.

The special data packet with the end marker carries a PDCP sequence number of a next data packet to be sent by the source eNB. The source eNB acquires a PDCP sequence number of a latest user data packet that has been sent according to the data sending buffer, and the acquired sequence number added by 1 is the PDCP sequence number of a next data packet to be sent by the source eNB.

During the generation of the special data packet with the end marker, a certain byte of a header of the data packet is set to make the special data packet capable of indicating the end of the sending, i.e., indicating that the special data packet is the last data packet in the currently sent data packets. The structure of the special data packet is the same as that in Embodiment 1, and the details will not be repeated herein. The special data packet with the end marker does not contain user data, and the target eNB will not send the special data packet to the UE after receiving the same.

In Block 406, the target eNB receives and sends the user data packet with the end marker to the UE. Afterward, Block 408 is performed.

In Block 407, the target eNB receives the special data packet with the end marker, and Block 408 is performed.

The target eNB receives the special data packet with the end marker, and acquires a PDCP sequence number carried in the data packet. Before sending a first S1-interface user data packet, the target eNB calculates a PDCP sequence number of the user data packet to be sent to the UE according to the acquired PDCP sequence number of the special data packet, thus ensuring that the PDCP numbers received by the UE are consecutive.

In Block 408, the target eNB sends S1-interface data packets to the UE.

Seen from the above technical solutions, the source eNB determines whether the data sending buffer thereof has any user data packet to be sent to the target eNB, and then generates and sends the user data packet with the end marker or the special data packet with the end marker to the target eNB, so as to inform the target eNB that all the X2-interface data packets have been sent out. The target eNB then forwards the S1-interface user data packets to the UE. Through the technical solutions of this example, the target eNB does not need to wait for a timer to expire to forward the S1-interface data packets, thus improving the user data packet forwarding efficiency in the X2 handover.

### [Embodiment 4]

In this embodiment, an LTE network including a source eNB, a target eNB, a UE, and an SGW is provided.

After receiving a response for handover completion (e.g. handover complete Ack) from the SGW, if the target eNB receives a special data packet with an end marker sent by the source eNB, the target eNB starts sending S1-interface user data packets to the UE.

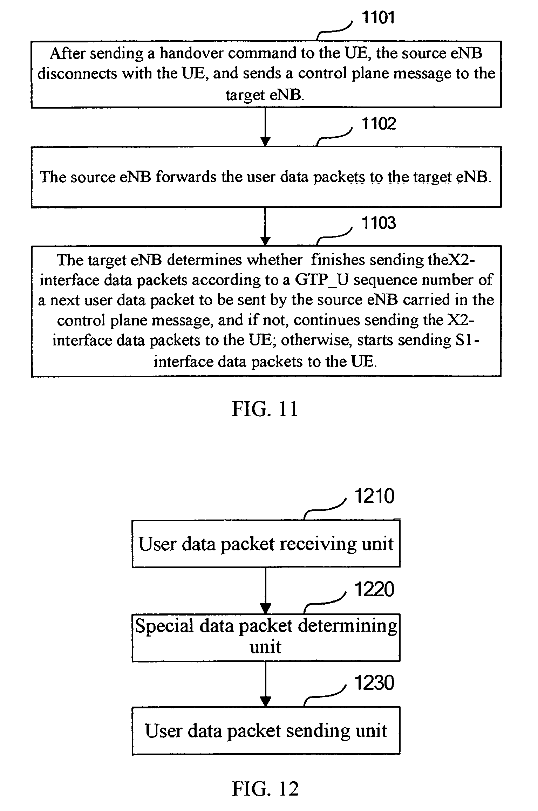

Referring to FIG. 12, the target eNB further includes a user data packet receiving unit 1210, a special data packet determining unit 1220, and a user data packet sending unit 1230. The user data packet receiving unit 1210 receives user data packets delivered by the SGW. After the eNB receives the handover complete Ack from the SGW, the special data packet determining unit 1220 determines whether the special data packet with the end marker is received, and if the special data packet with the end marker is received, a result that the special data packet is received is generated. The user data packet sending unit 1230 sends the S1 interface user data packets received by the user data packet receiving unit to the UE when the special data packet determining unit generates the result that the special data packet is received.

The special data packet with the end marker received by the target eNB may be generated by the SGW or by the source eNB. During the generation of the special data packet with the end marker, a certain byte of a header of the data packet is set to make the special data packet capable of indicating the end of the sending, i.e., indicating that the special data packet is the last data packet in the currently sent data packets. The structure of the special data packet is the same as that in Embodiment 1, and the details will not be repeated herein. The special data packet with the end marker does not contain user data, and the target eNB will not send the special data packet to the UE after receiving the same.

The generation of the special data packet by the SGW and the source eNB is respectively described as follows.

### (1) Generated by the SGW:

In the X2 handover completion stage, after performing a path switching, the SGW generates and sends a special data packet with an end marker to the source eNB. The source eNB receives and forwards the special data packet with the end marker from the SGW to the target eNB. The target eNB receives the special data packet with the end marker, and starts sending S1-interface data packets to the UE.

### (2) Generated by the source eNB:

The source eNB receives a release resource message sent by the target eNB, then generates a special data packet with an end marker if it is determined that a data sending buffer of the source eNB does not have any user data packet to be sent to the target eNB, and sends the special data packet with the end marker to the target eNB. The target eNB receives the special data packet with the end marker, and starts sending S1-interface data packets to the UE.

If it is determined that the data sending buffer of the source eNB has certain user data packet to be sent to the target eNB, the source eNB adds an end marker to the last user data packet to be sent to the target eNB, and then sends the user data packet with the end marker to the target eNB. On receiving the user data packet with the end marker, the target eNB starts sending the S1-interface data packets after forwarding the user data packet with the end marker to the UE.

The generation of the special data packet with the end marker by the eNB further includes another implementation aspect.

The SGW generates a special data packet with an end marker to inform the source eNB that all the S1-interface data packets delivered by the SGW to the source eNB have been sent out. The source eNB receives the special data packet, and regenerates a special data packet with an end marker. The regenerated special data packet with the end marker carries a PDCP sequence number of a next user data packet to be sent by the source eNB. On receiving the regenerated special data packet with the end marker, the target eNB starts sending the S1-interface data packets after forwarding the special data packet to the UE.

The source eNB acquires a PDCP sequence number of a latest user data packet that has been sent according to the data sending buffer, and the acquired sequence number added by 1 is the PDCP sequence number of a next data packet to be sent by the source eNB. The target eNB receives the special data packet with the end marker, and acquires a PDCP sequence number carried in the data packet. Before sending a first S1-interface user data packet, the target eNB calculates a PDCP sequence number of the user data packet to be sent to the UE according to the acquired PDCP sequence number of the special data packet, thus ensuring that the PDCP numbers received by the UE are consecutive.

### [Example 5]

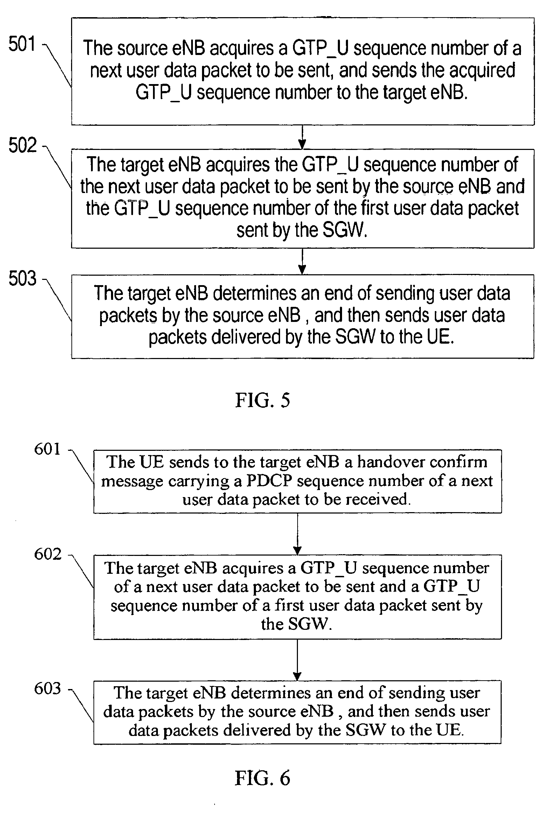

In a data forwarding method of this example, during an X2 handover, a target eNB determines when X2-interface data packets at a source eNB are all sent out according to a GPRS Tunneling Protocol User (GTP_U) sequence number of a next user data packet to be sent by the source eNB and a GTP_U sequence number of a first user data packet sent by an SGW, and then starts sending S1-interface data packets to a UE. FIG. 5 is a simplified flow chart of the data forwarding method of this example.

In Block 501, in an X2 handover preparation stage, the source eNB receives a response for handover request (e.g handover request Ack) sent by the target eNB, acquires a GTP_U sequence number of a next user data packet to be sent by the source eNB, and sends the acquired GTP_U sequence number to the target eNB.

In the X2 handover preparation stage, the source eNB receives the handover request Ack from the target eNB, and terminates sending the user data packets to the UE. The SGW delivers the user data packets to the source eNB via a GPRS Tunneling Protocol (GTP). Each user data packet carries a GTP_U sequence number, and the GTP_U sequence numbers carried in the user data packets sent by the SGW are consecutive, which are generally in an ascending order. The source eNB acquires a PDCP sequence number of a latest user data packet that has been sent according to the data sending buffer, and the acquired sequence number added by 1 is the PDCP sequence number of a next data packet to be sent by the source eNB.

It should be noted that, the source eNB may forward the GTP_U sequence number of the next user data packet to be sent by the source eNB to the target eNB in the following two manners. In the first manner, a message carrying the GTP_U sequence number and the PDCP sequence number of the next user data packet to be sent by the source eNB on a control plane is generated, and then the message is sent to the target eNB, for example, an HO commit message carrying the GTP_U sequence number and the PDCP sequence number of the next user data packet to be sent by the source eNB is sent. The other manner is combining the method of generating a special data packet by the source eNB in Embodiment 1. In particular, after receiving a handover request Ack from the target eNB, the source eNB terminates sending the user data packets to the UE, generates a special data packet carrying the GTP_U sequence number and the PDCP sequence number of the next user data packet to be sent by the source eNB on a user plane, and forwards the special data packet to the source eNB as a first data packet sent by the target eNB to the source eNB. The special data packet does not contain user data, and the target eNB will not send the special data packet to the UE after receiving the same.

In Block 502, the target eNB acquires the GTP_U sequence number of the next user data packet to be sent by the source eNB and the GTP_U sequence number of the first user data packet sent by the SGW.

In the X2 handover completion stage, after performing a path switching, the SGW sends the user data packets to the target eNB. The target eNB acquires the GTP_U sequence number of the first user data packet sent by the SGW. The SGW maintains the continuity of the GTP_U sequence numbers during the path switching. Specifically, the SGW performs a path switching after receiving a handover complete message from the target eNB, and then sets a GTP_U sequence number of the path after the handover according to a GTP_U sequence number of the path before the handover, thus ensuring that the GTP_U sequence numbers are consecutive.

In Block 503, in the X2 handover completion stage, on receiving a response for handover completion (e.g.handover complete Ack) sent by a core network equipment, the target eNB determines that the sending of user data packets from the source eNB to the target eNB (i.e., X2-interface data packets) is completed according to the GTP_U sequence number of the next user data packet to be sent by the source eNB and the GTP_U sequence number of the first user data packet sent by the SGW, and then sends user data packets delivered by the SGW (i.e., S1-interface data packets) to the UE.

The completion of the sending of the user data packets from the source eNB to the target eNB (i.e., X2-interface data packets) can be determined according to the GTP_U sequence number of the next user data packet to be sent by the source eNB and the GTP_U sequence number of the first user data packet sent by the SGW in various manners, and three of them are described as follows.
(1) All the GTP_U sequence numbers of the user data packets sent by the source eNB to the target eNB in the handover process are acquired according to the GTP_U sequence number of the next user data packet to be sent by the source eNB and the GTP_U sequence number of the first user data packet sent by the SGW. If the user data packets corresponding to all the GTP_U sequence numbers are received, it is determined that all the user data packets sent by the source eNB to the target eNB (i.e., X2-interface data packets) have been sent out.
   For example, if the GTP_U sequence number of the next user data packet to be sent by the source eNB is 1000, and the GTP_U sequence number of the first user data packet sent by the SGW is 1000, in the interface conversion, no data is forwarded via the X2 interface, and the target eNB directly sends the S1-interface data packets to the UE.
   Moreover, if the GTP_U sequence number of the next user data packet to be sent by the source eNB is 1000, and the GTP_U sequence number of the first user data packet sent by the SGW is 1051, in this X2 handover process, the GTP_U sequence numbers of the user data packets sent by the source eNB to the target eNB fall in a range of 1000 to 1050. The target eNB has various methods to determine whether the user data packets forwarded by the source eNB are all sent out or not. In an example, the target eNB saves the calculated GTP_U sequence numbers in the range of 1000 to 1050 in a database. On receiving a user data packet via the X2 interface, the target eNB acquires a GTP_U sequence number of the user data packet, and deletes the sequence number from the database that records all the GTP_U sequence numbers when sending the user data packet to the UE. When the sequence number in the database is 0, the user data packets required to be forwarded by the source eNB via the X2 interfaces have been sent out, and the target eNB forwards to the UE all the user data packets sent from the source eNB. In another example, on receiving the user data packets via the X2 interfaces, the target eNB acquires the GTP_U sequence numbers of the user data packets, and saves the acquired GTP_U sequence numbers of the user data packets in another database when forwarding the user data packets to the UE. When the records in the database that saves all the acquired GTP_U sequence numbers of the user data packets are identical to those in the previous database that saves all the GTP_U sequence numbers, it indicates the user data packets required to be forwarded by the source eNB via the X2 interfaces have been sent out, and the target eNB forwards all the user data packets from the source eNB to the UE.
(2) A maximum GTP_U sequence number among the user data packets sent by the source eNB to the target eNB in the handover process is acquired according to the GTP_U sequence number of the next user data packet to be sent by the source eNB and the GTP_U sequence number of the first user data packet sent by the SGW. If the user data packet corresponding to the maximum GTP_U sequence number is received, it is determined an end of sending user data packets by the source eNB.
   For example, if the GTP_U sequence number of the next user data packet to be sent by the source eNB is 1000, and the GTP_U sequence number of the first user data packet sent by the SGW is 1051, in this X2 handover process, the maximum GTP_U sequence number among the user data packets forwarded by the source eNB to the target eNB via the X2 interfaces is 1050. If the user data packet with the GTP_U sequence number of 1050 is received via the X2 interface, it is determined an end of sending user data packets by the source eNB.
(3) When the GTP_U sequence number of the next user data packet to be sent by the source eNB is larger than or equal to the GTP_U sequence number of the first user data packet sent by the SGW, it is determined that all the user data packets forwarded by the source eNB to the target eNB have been sent out. When the GTP_U sequence number of the next user data packet to be sent by the source eNB is smaller than the GTP_U sequence number of the first user data packet sent by the SGW, it is determined that the user data packets forwarded by the source eNB to the target eNB have not been completely sent out, and the source eNB continues to send the X2-interface data packets to the UE till the GTP_U sequence number of the next user data packet to be sent by the source eNB is equal to the GTP_U sequence number of the first user data packet sent by the SGW. At this point, no data is forwarded by the source eNB, and the source eNB starts sending to the UE the S1-interface data packets delivered by the SGW to the target eNB.

It should be noted that, in the above technical solutions, the source eNB may not send the GTP_U sequence number of the next user data packet to be sent to the target eNB, but instead sends a GTP_U sequence number of a last user data packet delivered by the source eNB to the UE in the X2 handover preparation stage to the target eNB. As the GTP_U sequence numbers of the user data packets are consecutive, the target eNB determines whether the source eNB finishes sending user data packets according to the GTP_U sequence number of the last user data packet delivered by the source eNB to the UE and the GTP_U sequence number of the first user data packet sent by the SGW.

Seen from the above technical solutions, the source eNB sends the GTP_U sequence number of the next user data packet to be sent to the target eNB. The target eNB determines an end of sending user data packets by the source eNB according to the GTP_U sequence number of the next user data packet to be sent by the source eNB and the GTP_U sequence number of the first user data packet sent by the SGW, and then forwards the user data packets delivered by the SGW to the UE. Thereby, the target eNB does not need to wait for a timer to expire to forward the S1-interface data packets, thus improving the user data packet forwarding efficiency in the X2 handover.

### [Example 6]

In a data forwarding method of this example, a target eNB determines when X2-interface data packets at a source eNB are all sent out according to a GTP_U sequence number of a next user data packet to be sent by the source eNB and a GTP_U sequence number of a first user data packet sent by an SGW, and then starts sending S1-interface data packets to a UE. Different from Example 5, in this example, the target eNB acquires the GTP_U sequence number of the next user data packet to be sent by the source eNB according to a PDCP sequence number of a next user data packet to be received by the UE. FIG. 6 is a flow chart of the data forwarding method of this example.

In Block 601, in an X2 handover execution stage, the UE sends the PDCP sequence number of the next user data packet to be received by the UE to the target eNB.

In the X2 handover execution stage, when sending a handover confirm message to the target eNB, the UE adds the PDCP sequence number of the next user data packet to be received by the UE to the handover confirm message, and sends to the target eNB the handover confirm message carrying the PDCP sequence number of the next user data packet to be received. The PDCP sequence number of the next user data packet to be received is calculated according to a PDCP sequence number of a last user data packet received by the UE from the source eNB in an X2 handover preparation stage.

In Block 602, the target eNB acquires a GTP_U sequence number of a next user data packet to be sent by the source eNB and a GTP_U sequence number of a first user data packet sent by the SGW.

The target eNB acquires the PDCP sequence number of the next user data packet to be received by the UE. On receiving a user data packet carrying the PDCP sequence number sent by the source eNB, the target eNB acquires the GTP_U sequence number carried in the user data packet, and regards the acquired GTP_U sequence number as the GTP_U sequence number of the next user data packet to be sent by the target eNB after the source eNB receives a response for handover request (e.g. Handover Request Ack). Alternatively, according to the method in example 5, the GTP_U sequence number is acquired through control plane signaling, a message carrying the GTP_U sequence number of the next user data packet to be sent by the source eNB and the PDCP sequence number is generated on a control plane, and the message is then sent to the target eNB.

The SGW maintains the continuity of the GTP_U sequence numbers during the path switching. Specifically, the SGW performs a path switching after receiving a handover complete message from the target eNB, and then sets a GTP_U sequence number of the path after the handover according to a GTP_U sequence number of the path before the handover, thus ensuring that the GTP_U sequence numbers are consecutive.

In Block 603, in the X2 handover completion stage, on receiving a response for handover completion (e.g. handover complete Ack) sent by the SGW, the target eNB determines that the sending of user data packets from the source eNB to the target eNB (i.e., X2-interface data packets) is completed according to the GTP_U sequence number of the next user data packet to be sent by the source eNB and the GTP_U sequence number of the first user data packet sent by the SGW, and then sends user data packets delivered by the SGW (i.e., S1-interface data packets) to the UE.

The completion of the sending of the user data packets from the source eNB to the target eNB (i.e., X2-interface data packets) can be determined according to the GTP_U sequence number of the next user data packet to be sent by the source eNB and the GTP_U sequence number of the first user data packet sent by the SGW in the same manner as the method in example 5, which will not be repeated herein.

Seen from the above technical solutions, the UE acquires the PDCP sequence number of the next user data packet to be received according to the PDCP sequence number of the last user data packet received from the source eNB in the X2 handover preparation stage, and then sends the acquired PDCP sequence number to the target eNB. On receiving a user data packet carrying the PDCP sequence number of the user data packet to be received from the source eNB, the target eNB acquires the GTP_U sequence number carried in the user data packet. Alternatively, the source eNB informs the target eNB of the GTP_U sequence number of the next user data packet to be sent through X2 control signaling, and the target eNB regards the acquired GTP_U sequence number as the GTP_U sequence number of the next user data packet to be sent after the source eNB receives a handover request Ack. The target eNB determines that the source eNB receives and forwards the user data packets according to the GTP_U sequence number of the first user data packet sent by the target eNB itself and the GTP_U sequence number of the first user data packet sent by the SGW, and then sends the user data packets delivered by the SGW to the UE. Thereby, the target eNB does not need to wait for a timer to expire to forward the S1-interface data packets, thus improving the user data packet forwarding efficiency in the X2 handover.

### [Example 7]

In this example, an LTE network including a source eNB, a target eNB, and an SGW is provided.

The source eNB acquires a GTP_U sequence number of a next user data packet to be sent on receiving a response for handover request (e.g. handover request Ack), and sends to the target eNB a message carrying the GTP_U sequence number of the next user data packet to be sent by the source eNB after receiving the handover request Ack. The target eNB acquires the GTP_U sequence number of the next user data packet to be sent by the source eNB and a GTP_U sequence number of a first user data packet sent by the SGW. In a handover completion stage between the eNBs without involving a core network, the target eNB receives a response for handover completion (e.g. handover complete Ack) from a core network equipment, determines an end of sending user data packets by the source eNB according to the GTP_U sequence number of the next user data packet to be sent by the source eNB and the GTP_U sequence number of the first user data packet sent by the SGW, and then sends user data packets delivered by the SGW to the UE.

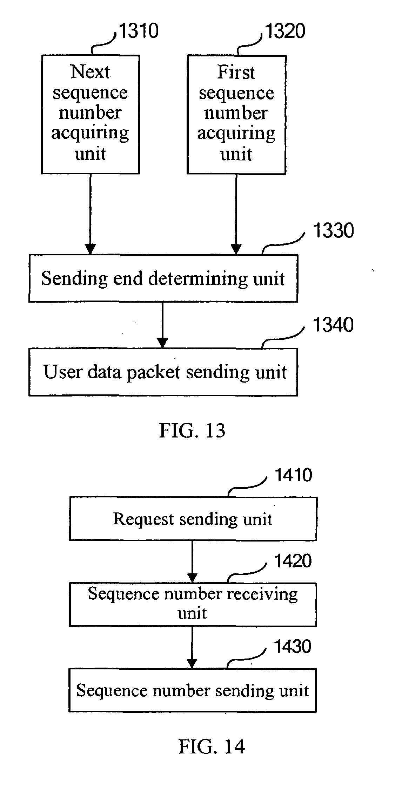

Referring to FIG. 13, the target eNB includes a next sequence number acquiring unit 1310, a first sequence number acquiring unit 1320, a sending end determining unit 1330, and a data packet sending unit 1340. The next sequence number acquiring unit 1310 is configured to acquire the GTP_U sequence number of the next user data packet to be sent by the source eNB on receiving the handover request Ack. The first sequence number acquiring unit 1320 is configured to acquire the GTP_U sequence number of the first user data packet sent by the SGW. The sending end determining unit 1330 is configured to determine whether the source eNB finishes sending the user data packets according to the GTP_U sequence number of the next user data packet to be sent acquired by the next sequence number acquiring unit and the GTP_U sequence number of the first user data packet acquired by the first sequence number acquiring unit after the target eNB receives a response for handover completion (e.g.handover complete Ack) from a core network equipment in a handover completion stage between the eNBs without involving a core network. If the sending end determining unit 1330 determines an end of sending user data packets by the source eNB the data packet sending unit 1340 is configured to send the user data packets delivered by the SGW to the UE.

The target eNB may acquire the GTP_U sequence number of the next user data packet to be sent by the source eNB in the following manner: the source eNB carries the GTP_U sequence number of the next user data packet to be sent in a message, and then sends the message to the target eNB. A method described below may also be adopted.

The UE sends to the target eNB a PDCP sequence number of a next user data packet to be received. The target eNB acquires the PDCP sequence number of the next user data packet to be received from the UE. On receiving the user data packet carrying the PDCP sequence number sent by the source eNB, the target eNB acquires the GTP_U sequence number of the user data packet, and regards the acquired GTP_U sequence number as the GTP_U sequence number of the next user data packet to be sent by the source eNB.

### [Example 8]

An SGW delivers user data packets to an eNB via a GTP. Each user data packet carries a GTP_U sequence number, and the GTP_U sequence numbers carried in the user data packets sent by the SGW are consecutive, which are generally in an ascending order. The eNB checks the user data packets sent by the SGW according to the continuity of the GTP_U sequence numbers.

In an SGW relocation stage, according to the prior art, a target SGW (after relocation) is unable to know the GTP_U sequence number of the next user data packet to be sent by a source SGW (before relocation), thus resulting in that when the SGW relocation is completed, a GTP_U sequence number of a first user data packet sent by the target SGW to the eNB is inconsecutive to a GTP_U sequence number of a last user data packet sent by the source SGW to the eNB. The GTP_U sequence number of the next user data packet to be sent by the source SGW refers to the GTP_U sequence number of the user data packet to be sent by the source SGW after sending the last user data packet to the eNB in the SGW relocation stage.

The technical solutions provided by this example are as follows. An MME acquires from the source SGW the GTP_U sequence number of the next user data packet to be sent by the source SGW, and sends the acquired GTP_U sequence number to the target SGW. The target SGW regards the GTP_U sequence number of the next user data packet to be sent as the GTP_U sequence number of the first user data packet sent to the eNB. After the SGW relocation is completed, the target SGW sends the first user data packet carrying the GTP_U sequence number to the eNB. Thereby, the continuity of the GTP_U sequence numbers of the data packets sent by the eNB is maintained.

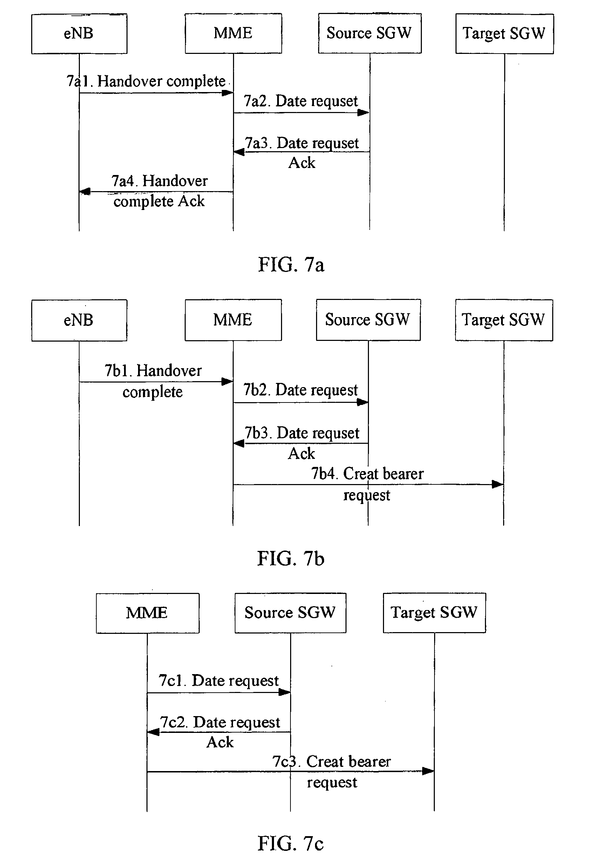

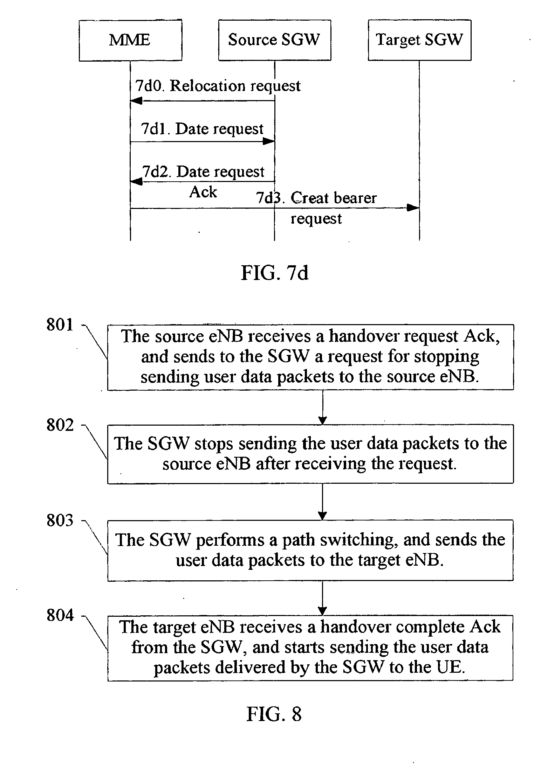

Several manners for the target SGW to acquire the GTP_U sequence number of the next user data packet to be sent by the source SGW are described below in the example with the accompanying drawings.
(1) A manner shown in FIG. 7a is performed when the eNB is handed over from the source SGW to the target SGW.
   In Block 7a1, the eNB sends a handover complete message (Ho complete) to the MME after the handover process is completed.
   In Block 7a2, the MME receives the Ho complete message, and sends a data request message (Data req) to the source SGW for requiring the GTP_U sequence number of the next data packet to be sent by the source SGW.
   In Block 7a3, the source SGW sends the GTP_U sequence number of the next data packet to be sent by the source SGW to the MME through a data request Ack message (Data req ack).
   In Block 7a4, the MME sends to the eNB the GTP_U sequence number of the next data packet to be sent by the source SGW via a response for handover completion (e.g. handover complete Ack) on a control plane, such that the GTP_U sequence numbers between the SGWs form a certain corresponding relation, and thus become consecutive.
   For example, the target eNB adds the GTP_U sequence number as an offset to the GTP_U sequence number of the first data packet delivered by the target SGW, and then compares the acquired GTP_U sequence number with the GTP_U sequence number of the data packet forwarded by the source eNB, so as to determine whether the data forwarding via the X2 interface is completed or not. If the former sequence number is larger than the latter, no data is forwarded via the X2 interface, and the target eNB directly sends the data delivered by the SGW to the UE; and if the former is smaller than the latter, some data is forwarded via the X2 interface, and the target eNB sends the data delivered by the SWG to the UE after forwarding the X2-interface data to the UE.
(2) Similarly, another manner shown in FIG 7b is performed when the eNB is handed over from the source SGW to the target SGW. In this manner, Blocks 7b1 to 7b3 are the same as Blocks 7a1 to 7a3, and the details will not be repeated herein.
   In Block 7b4, the MME sends the GTP_U sequence number of the data packet to be sent by the source SGW to the target SGW via a create bearer request message (Create bearer req).
(3) Another manner is shown in FIG. 7c, in which the MME initiates the selection of the target SGW in a non-handover process.
   In Block 7c1, the MME sends a data request message (Data req) to the source SGW for requiring the GTP_U sequence number of the next data packet to be sent by the source SGW.
   In Block 7c2, the SGW sends the GTP_U sequence number of the next data packet to be sent by the source SGW to the MME through a data request Ack message (Data req ack).
   In Block 7c3, the MME informs the target SGW of the GTP_U sequence number of the next data packet to be sent by the source SGW via the Create bearer req message.
(4) Another manner is further shown in FIG. 7d, in which the source SGW initiates the selection of the target SGW in a non-handover process.

Blocks 7d1 to 7d3 are the same as Blocks 7c1 to 7c3, and this manner further includes the following Block before Block 7d1.

In Block 7d0, the source SGW sends an SGW relocation request to the MME.

The MME receives the relocation request, and performs Block 7d1.

Seen from the above technical solutions, in the SGW relocation stage, the MME acquires the GTP_U sequence number of the next user data packet to be sent by the source SGW, and sends the acquired GTP_U sequence number to the target SGW. The target SGW regards the GTP_U sequence number of the next user data packet to be sent as the GTP_U sequence number of the first user data packet sent by the target SGW itself. Alternatively, the MME acquires the GTP_U sequence number of the next user data packet to be sent by the source SGW, and sends the acquired GTP_U sequence number to the eNB, such that the GTP_U sequence numbers between the SGWs form a certain corresponding relation. Thereby, after the SGW relocation is completed, the GTP_U sequence number of the first user data packet sent by the target SGW to an eNB is consecutive to the GTP_U sequence number of the last user data packet sent by the source SGW to the eNB.

### [Example 9]

In this example, an LTE network including an MME, a source SGW, and a target SGW is provided. The MME is configured to send to the source SGW a request for acquiring a GTP_U sequence number of a next user data packet to be sent in an SGW relocation stage, and send the acquired GTP_U sequence number from the source SGW to the target SGW; or, send the acquired GTP_U sequence number from the source SGW to an eNB, such that the GTP_U sequence numbers between the source SGW and the target SGW form a certain corresponding relation. The source SGW is configured to receive the request from the MME for acquiring the GTP_U sequence number of the next user data packet to be sent, and send the acquired GTP_U sequence number to the MME. The target SGW is configured to receive the GTP_U sequence number of the next user data packet to be sent from the MME, and regard the GTP_U sequence number of the next user data packet to be sent as the GTP_U sequence number of the first user data packet sent by the target SGW itself.

Referring to FIG. 14, the MME includes a request sending unit 1410, a sequence number receiving unit 1420, and a sequence number sending unit 1430. The request sending unit 1410 is configured to send to the source SGW the request for acquiring the GTP_U sequence number of the next user data packet to be sent by the source SGW in the SGW relocation stage. The sequence number receiving unit 1420 is configured to receive the GTP_U sequence number of the next user data packet to be sent by the source SGW. The sequence number sending unit 1430 is configured to send to the target SGW the GTP_U sequence number of the next user data packet to be sent by the source SGW received by the sequence number receiving unit, or is configured to send to the eNB the GTP_U sequence number of the next user data packet to be sent by the source SGW, such that the GTP_U sequence numbers between the source SGW and the target SGW form a certain corresponding relation.

### [Example 10]

Referring to FIG 8, a data forwarding method is provided in this example, which includes the following Blocks.

In Block 801, during an X2 handover preparation stage, a source eNB receives a response for handover request (e.g. handover request Ack) from a target eNB, and sends to an SGW a request for terminating sending user data packets to the source eNB. Before receiving the handover request Ack from the target eNB, the SGW sends the user data packets to the source eNB, and the source eNB forwards user data packets delivered by the SGW to the UE. It can be understood that, during the implementation of this example, the source eNB may also send to the SGW the request for terminating sending user data packets to the source eNB after sending a handover command to the UE.

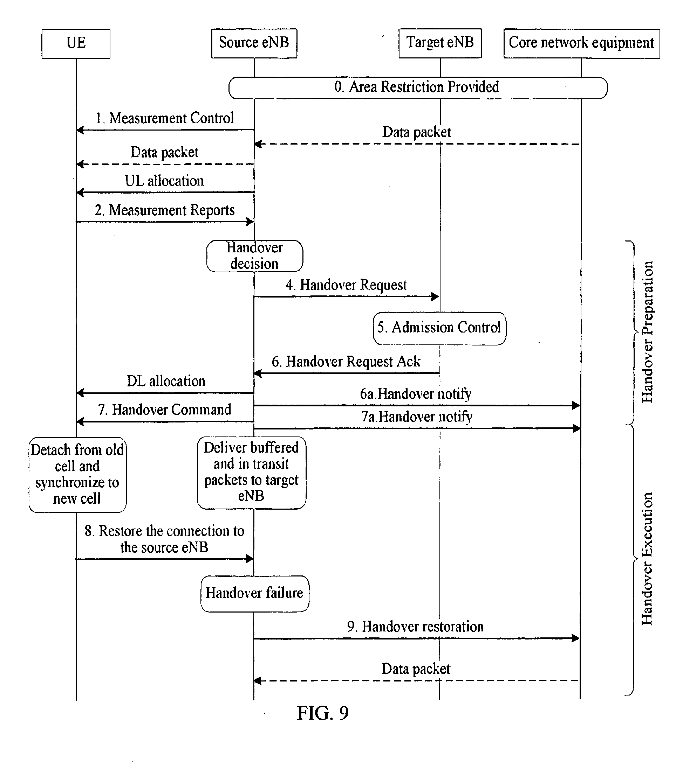

In Block 802, the SGW terminates sending the user data packets to the source eNB on receiving the request for terminating sending user data packets to the source eNB. This Block may refer to Block 6a or 7a in FIG. 9.

In Block 803, in an X2 handover completion stage, the SGW performs a path switching, and sends the user data packets to the target eNB.

In Block 804, the target eNB receives a response for handover completion (e.g. handover complete Ack) from the SGW, and starts sending the user data packets delivered by the SGW to the UE.

Further, in an X2 handover execution stage, the X2 handover may fail as the UE is unable to keep synchronous to the target eNB or due to other reasons. In order to solve such problems, the following Blocks are added to this example. In the X2 handover execution stage, the source eNB restores its connection after determining that the X2 handover fails, and sends to the SGW a request for restoring the sending of the user data packets to the source eNB. The SGW receives the request for restoring the sending of the user data packets to the source eNB, and starts sending the user data packets to the source eNB. The above process may refer to Block 9 in FIG. 9.

FIG. 9 is a flow chart of restoring the sending of S1-interface data packets to the source eNB when the X2 handover fails according to this example, which includes the following Blocks.

Blocks 1 to Block 5 are similar to Blocks 1 to 5 in the background of the invention, and the details will not be repeated herein.

In Block 6, the target eNB sends a handover request Ack to the source eNB, and the source eNB sends to a core network equipment a handover notification message (Ho notify) carrying a request for terminating sending user data packets to the source eNB.

In Block 7, the source eNB sends a handover command to the UE.

In Block 8, the UE sends to the source eNB a message for restoring the connection to the source eNB.

In Block 9, after the source eNB determines that the handover fails, the UE restores the connection to the source eNB, and the source eNB sends to the SGW a request for restoring the sending of the user data packets to the source eNB. The SGW receives the request for restoring the sending of the user data packets to the source eNB, and starts sending the user data packets to the source eNB.

Seen from the above technical solutions, during the X2 handover preparation stage, the source eNB sends to the SGW the request for terminating sending user data packets to the source eNB after receiving the handover request Ack from the target eNB, and the SGW terminates sending the user data packets to the source eNB on receiving the request. During the X2 handover execution stage, the source eNB will not forward the user data packets to the target eNB via the X2 interfaces. During the X2 handover completion stage, the target eNB receives the handover complete Ack from the SGW, and starts sending the user data packets delivered by the SGW to the UE. Thereby, the target eNB does not need to wait for a timer to expire to forward the S1-interface data packets, thus improving the user data packet forwarding efficiency in the X2 handover.

Seen from the above technical solutions, during the X2 handover execution stage, the eNB sends to the SGW the request for restoring the sending of the user data packets to the source eNB after determining that the X2 handover fails, and SGW starts sending the user data packets to the source eNB on receiving the request. Thereby, in case of an X2 handover failure, the network restores to a state before the X2 handover, so as to ensure a normal operation of the network.

### [Example 11]

A data forwarding method is provided in this example, which includes the following Blocks. In an X2 handover preparation stage (specific stages of the X2 handover are divided in the same way as the background of the invention), a source eNB sends a handover command to a UE, the source eNB disconnects the UE, and the source eNB forwards data via X2 interfaces. At this point, the source eNB sends a control plane message to a target eNB, and the control plane message carries a PDCP sequence number and a GTP_U sequence number of a first user data packet required to be set by the target eNB. The target eNB determines when X2-interface data packets at the source eNB are all sent out according to the above GTP_U sequence number and the GTP_U sequence number of the first user data packet sent by the SGW, and then starts sending S1-interface data packets to the UE. Referring to FIG. 11, this example mainly has the following Blocks.

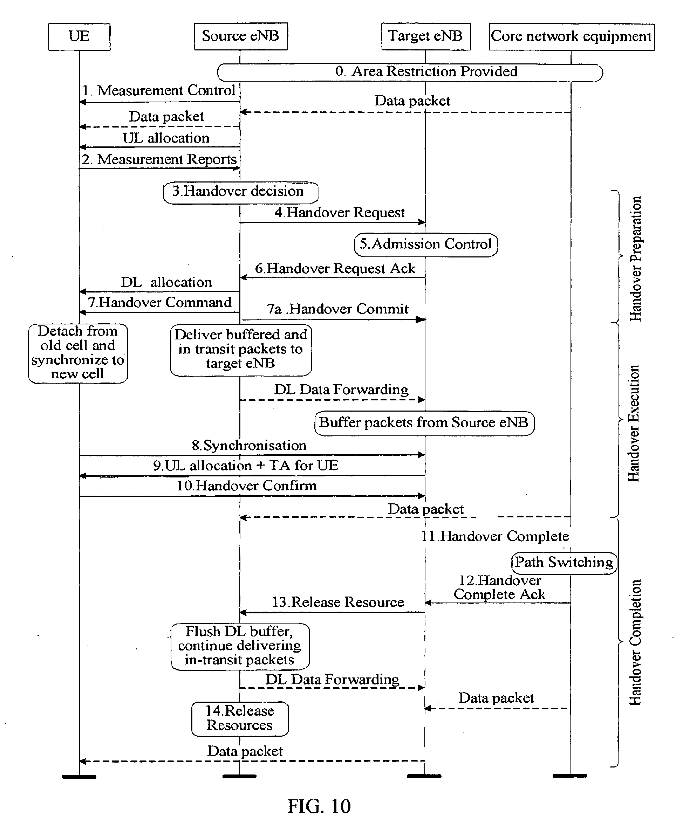

In Block 1101, after sending a handover command to the UE, the source eNB disconnects the UE, and sends a control plane message to the target eNB, for example, a handover confirm message (Ho commit), referring to the message at Block 7a in FIG 10. Other Blocks in the process of this figure are similar to those in the process of the background of the invention, and the details will not be repeated herein. The control plane message carries a PDCP sequence number and a GTP_U sequence number of a first user data packet required to be set by the target eNB.

The PDCP sequence number of the first user data packet required to be set by the target eNB is acquired by adding 1 to a PDCP sequence number of a last user data packet sent by the source eNB from a PDCP layer to a lower layer, and a GTP_U sequence number of a next user data packet to be sent by the source eNB is acquired by adding 1 to a GTP_U sequence number of the last user data packet sent by the source eNB from the PDCP layer to a lower layer.

In Block 1102, the source eNB forwards the user data packets to the target eNB.

The source eNB forwards two types of user data packets to the target eNB.
(1) User data packets processed by the PDCP layer. The source eNB carries the PDCP sequence numbers when sending the user data packets via the X2 interfaces. In this case, the source eNB selectively sends the user data packets to the target eNB according to the fact whether the lower layer receives a reception Ack from the UE or not. For example, before the handover, if the source eNB directly sends user data packets 1, 2, 3, and 4 to the UE, the UE only receives the user data packets 1 and 4, and sends a reception Ack about the user data packets 1 and 4 to the source eNB; while after the handover, the source eNB only forwards the user data packets 2 and 3 to the target eNB according to the reception Ack.
(2) User data packets unprocessed by the PDCP layer. The source eNB does not carry the PDCP sequence numbers when sending the user data packets via the X2 interfaces.

Therefore, the data forwarded by the source eNB to the target eNB via the X2 interfaces includes three cases formed by the above two types of user data packets, i.e., two cases respectively including one type of data packets, and one case including the two types of data packets.

For example, the source eNB sends user data packets with PDCP sequence numbers of 1, 3 to the target eNB, i.e., the two data packets are processed by the PDCP layer and respectively acquire a PDCP sequence number. The source eNB sends a control plane message (for example, Ho commit) to the target eNB, and the control plane message carries a PDCP sequence number of 4 and a GTP_U sequence number of 5. Thereby, when receiving the user data packets with the PDCP sequence numbers of 1, 3, the target eNB receives the control plane message, and sets a PDCP sequence number of a next data packet to be sent to the UE as 4.

In Block 1103, the target eNB determines whether X2-interface data packets (i.e., data forwarded by the source eNB to the target eNB via the X2 interfaces) are all sent out according to the GTP_U sequence number of the next user data packet to be sent by the source eNB carried in the control plane message (for example, Ho commit), and if X2-interface data packets are not all sent out, continues sending the X2-interface data packets to the UE; otherwise, starts sending S1-interface data packets to the UE.

In this Block, whether the X2-interface data packets are all sent out or not can be determined in the following manner. The target eNB acquires a GTP_U sequence number of a first S1-interface data packet sent by the SGW to the target eNB, and compares the acquired GTP_U sequence number with the GTP_U sequence number in the control plane message. If the GTP_U sequence number in the control plane message (Ho commit) is smaller than the GTP_U sequence number of the first S1-interface data packet sent by the SGW to the target eNB, the source eNB still has X2-interface data packets required to be sent to the target eNB, and the number of the left X2-interface data packets can be figured out according to a difference between the above two GTP_U sequence numbers, so that the target eNB continues sending the X2-interface data packets to the UE. Data packets without PDCP sequence numbers are numbered according to the PDCP SN in the control plane message; while those with PDCP sequence numbers maintain their original numbers and are forwarded to the UE. When the GTP_U sequence number in the control plane message (Ho commit) is equal to the GTP_U sequence number of the first S1-interface data packet sent by the SGW to the target eNB, the source eNB does not have any X2-interface data packet required to be sent to the target eNB, and the target eNB starts sending the S1-interface user data packets to the UE. When no X2-interface data packet is left, the data packets are numbered according to the PDCP SN in the control plane message, and when the X2-interface data packets are all forwarded, the data packets are numbered following the PDCP sequence numbers.

Further, the determination method in this Block may adopt the method in Example 5 of the present invention, and the details will not be repeated herein.

In this technical solution, the GTP_U sequence numbers delivered by the SGW before or after the path switching remain consecutive, which can be realized by various methods, for example, a packet data network gateway (PDN_GW) is configured to unitedly assign the GTP_U sequence numbers, or the method in Example 8 is employed to maintain the continuity of the GTP_U sequence numbers.

The aforementioned solutions can all be guaranteed by adding a timer to the target eNB, and if the timer expires, the S1-interface data is directly delivered.

Through the technical solutions provided in the above embodiments, the target eNB is enabled to figure out in time when the X2-interface data packets at the source eNB are all sent out, and starts sending the S1-interface data packets to the UE. Thereby, the target eNB does not need to wait for a timer to expire to forward the S1-interface data packets, thus improving the user data packet forwarding efficiency in the X2 handover.

In view of the above, the data forwarding method, the eNB, and the LTE network in a handover provided by the present invention are described in detail, so that those of ordinary skill in the art can make modifications and variations to the implementation and application range of the invention.

## Claims

1. A method for data forwarding, wherein in a handover completion stage between evolved NodeBs, eNBs, without involving a core network in a long term evolution, LTE, network, the method comprises:
receiving (202; 302), by a target eNB, user data packets delivered by a serving gateway, SGW, after the SGW performs a path switching (201); and
forwarding (204; 304), by the target eNB, the user data packets delivered by the SGW to a user equipment, UE, upon receiving a special data packet with an end marker from a source eNB,
wherein the special data packet does not contain user data and the special data packet is generated by the SGW and sent to the source eNB after the SGW performs the path switching;
wherein the end marker is set in a header of the special data packet to indicate the end of sending the user data packets.

2. The method of claim 1, wherein, before the receiving the special data packet, the method further comprises:
receiving (303), by the source eNB, the special data packet from the SGW, wherein the special data packet is generated by the SGW; and
sending, by the source eNB, the special data packet to the target eNB.

3. The method of claim 1, wherein, before the receiving the special data packet, the method further comprises:
receiving (303), by the source eNB, the special data packet from the SGW, wherein the special data packet is generated by the SGW;
regenerating (3031), by the source eNB, a special data packet with an end marker according to the special data packet sent by the SGW, wherein the regenerated special data packet does not contain user data and carries a PDCP sequence number of a next user data packet to be sent by the source eNB;
sending, by the source eNB, the regenerated special data packet to the target eNB.

4. The method of any one of claims 1 to 3, wherein, when the target eNB forwards the user data packets delivered by the SGW to the UE upon receiving the special data packet from the source eNB, the target eNB does not forward the special data packet to the UE.

5. A long term evolved, LTE, network, wherein the LTE network comprises: a user equipment, UE, a source evolved NodeB, eNB, a target eNB and a serving gateway, SGW, wherein
the target eNB is configured, in a handover completion stage between the source eNB and the target eNB without involving a core network, to receive user data packets delivered by the SGW after the SGW performs a path switching, and forward the user data packets delivered by the SGW to the UE upon receiving a special data packet with an end marker from the source eNB;
wherein the special data packet does not contain user data and the special data packet is generated by the SGW and sent to the source eNB after the SGW performs the path switching;
wherein the end marker is set in a header of the special data packet to indicate the end of sending the user data packets.

6. The LTE network of claim 5, wherein
the SGW is configured to generate the special data packet and send the special data packet to the source eNB after the SGW performs the path switching; and
the source eNB is configured to forward the special data packet to the target eNB upon receiving the special data packet sent by the SGW.

7. The LTE network of claim 5, wherein
the SGW is configured to generate the special data packet and send the special data packet to the source eNB after the SGW performs the path switching; and
the source eNB is configured to regenerate a special data packet with an end marker according to the special data packet sent by the SGW and send the regenerated special data packet to the target eNB, wherein the regenerated special data packet does not contain user data packets and carries a PDCP sequence number of a next user data packet to be sent by the source eNB.

8. An evolved NodeB, eNB, being a target eNB, wherein, in a handover completion stage between a source eNB and the target eNB without involving a core network in a long term evolution, LTE, network, the eNB comprises:
a user data packet receiving unit (1210), configured to receive user data packets delivered by a serving gateway, SGW;
a special data packet determining unit (1220), configured to determine whether a special data packet with an end marker is received from the source eNB, wherein the special data packet does not contain user data packets and the special data packet is generated by the SGW and sent to the source eNB after the SGW performs a path switching and the end marker is set in a header of the special data packet to indicate the end of sending the user data packets; and
a user data packet sending unit (1230), configured to send user data packets delivered by the SGW received by the user data packet receiving unit (1210) to a user equipment, UE, when the special data packet determining unit (1220) determines that the special data packet is received.

9. The eNB of claim 8, wherein, when the eNB performs as a source eNB, the eNB comprises:
a unit configured to receive the special data packet from the SGW, wherein the special data packet is generated by the SGW; and
a unit configured to send the special data packet to a target eNB.

10. The eNB of any one of claims 8 to 9, wherein the user data packet sending unit (1230) is further configured to not forward the special data packet to the UE, when the user data packet sending unit (1230) sends the user data packets delivered by the SGW to the UE.

## Patentansprüche

1. Verfahren zur Datenweiterleitung, wobei bei einer Handover-Abschlussphase zwischen "Evolved NodeBs", eNBs, ohne Beteiligung eines Kernnetzes in einem "Long Term Evolution"-Netz, LTE-Netz, das Verfahren Folgendes umfasst:
Empfangen (202; 302) von Benutzerdatenpaketen durch einen Ziel-eNB, die durch ein versorgendes Gateway, SGW, abgeliefert werden, nachdem das SGW eine Pfadumschaltung (201) durchführt; und
Weiterleiten (204; 304) der Benutzerdatenpakete durch den Ziel-eNB, die durch das SGW an ein Benutzergerät, UE, abgeliefert werden, beim Empfang eines speziellen Datenpakets mit einer Endemarkierung von einem Quellen-eNB,
wobei das spezielle Datenpaket keine Benutzerdaten enthält und das spezielle Datenpaket durch das SGW erzeugt und zu dem Quellen-eNB gesendet wird, nachdem das SGW die Pfadumschaltung durchführt;
wobei die Endemarkierung in einem Kopfteil des speziellen Datenpakets angeordnet ist, um das Ende des Sendens der Benutzerdatenpakete anzuzeigen.

2. Verfahren nach Anspruch 1, wobei das Verfahren vor dem Empfangen des speziellen Datenpakets ferner Folgendes umfasst:
Empfangen (303) des speziellen Datenpakets durch den Quellen-eNB von dem SGW, wobei das spezielle Datenpaket durch das SGW erzeugt wird; und
Senden des speziellen Datenpakets durch den Quellen-eNB zu dem Ziel-eNB.

3. Verfahren nach Anspruch 1, wobei das Verfahren vor dem Empfangen des speziellen Datenpakets ferner Folgendes umfasst:
Empfangen (303) des speziellen Datenpakets durch den Quellen-eNB von dem SGW, wobei das spezielle Datenpaket durch das SGW erzeugt wird;
Regenerieren (3031) eines speziellen Datenpakets mit einer Endemarkierung durch den Quellen-eNB gemäß dem durch das SGW gesendeten speziellen Datenpaket, wobei das regenerierte spezielle Datenpaket keine Benutzerdaten enthält und eine PDCP-Sequenznummer eines nächsten durch den Quellen-eNB zu sendenden Benutzerdatenpakets führt; und
Senden des regenerierten speziellen Datenpakets durch den Quellen-eNB zu dem Ziel-eNB.

4. Verfahren nach einem der Ansprüche 1 bis 3, wobei, wenn der Ziel-eNB die durch das SGW abgelieferten Benutzerdatenpakete beim Empfang des speziellen Datenpakets von dem Quellen eNB zu dem UE weiterleitet, der Ziel-eNB das spezielle Datenpaket nicht zu dem UE weiterleitet.

5. "Long Term Evolved"-Netz, LTE-Netz, wobei das LTE-Netz ein Benutzergerät, UE, einen Quellen-"Evolved NodeB", Quellen-eNB, einen Ziel-eNB und ein versorgendes Gateway, SGW, umfasst, wobei
der Ziel-eNB in einer Handover-Abschlussphase zwischen dem Quellen-eNB und dem Ziel-eNB ohne Beteiligung eines Kernnetzes ausgelegt ist zum Empfangen von Benutzerdatenpaketen, die durch das SGW abgeliefert werden, nachdem das SGW eine Pfadumschaltung durchführt, und Weiterleiten der durch das SGW abgelieferten Benutzerdatenpakete zu dem UE beim Empfang eines speziellen Datenpakets mit einer Endemarkierung von dem Quellen-eNB;
wobei das spezielle Datenpaket keine Benutzerdaten enthält und das spezielle Datenpaket durch das SGW erzeugt und zu dem Quellen-eNB gesendet wird, nachdem das SGW die Pfadumschaltung durchführt;
wobei die Endemarkierung in einem Kopfteil des speziellen Datenpakets angeordnet ist, um das Ende des Sendens der Benutzerdatenpakete anzuzeigen.

6. LTE-Netz nach Anspruch 5, wobei
das SGW ausgelegt ist zum Erzeugen des speziellen Datenpakets und Senden des speziellen Datenpakets zu dem Quellen-eNB, nachdem das SGW die Pfadumschaltung durchführt; und
der Quellen-eNB ausgelegt ist zum Weiterleiten des speziellen Datenpakets zu dem Ziel-eNB beim Empfang des durch das SGW gesendeten speziellen Datenpakets.

7. LTE-Netz nach Anspruch 5, wobei
das SGW ausgelegt ist zum Erzeugen des speziellen Datenpakets und Senden des speziellen Datenpakets zu dem Quellen-eNB, nachdem das SGW die Pfadumschaltung durchführt; und
der Quellen-eNB ausgelegt ist zum Regenerieren eines speziellen Datenpakets mit einer Endemarkierung gemäß dem durch das SGW gesendeten speziellen Datenpaket und Senden des regenerierten speziellen Datenpakets zu dem Ziel-eNB, wobei das regenerierte spezielle Datenpaket keine Benutzerdatenpakete enthält und eine PDCP-Sequenznummer eines nächsten durch den Quellen-eNB zu sendenden Benutzerdatenpakets führt.

8. "Evolved NodeB" eNB, der ein Ziel-eNB ist, in einer Handover-Abschlussphase zwischen einem Quellen-eNB und dem Ziel-eNB ohne Beteiligung eines Kernnetzes in einem "Long Term Evolution"-Netz, LTE-Netz, wobei der eNB Folgendes umfasst:
eine Benutzerdatenpaket-Empfangseinheit (1210), ausgelegt zum Empfangen von durch ein versorgendes Gateway, SGW, abgelieferten Benutzerdatenpaketen;
eine Bestimmungseinheit (1220) spezieller Datenpakete, ausgelegt zum Bestimmen, ob ein spezielles Datenpaket mit einer Endemarkierung von dem Quellen-eNB empfangen wird, wobei das spezielle Datenpaket keine Benutzerdatenpakete enthält und das spezielle Datenpaket durch das SGW erzeugt und zu dem Quellen-eNB gesendet wird, nachdem das SGW eine Pfadumschaltung durchführt, und die Endemarkierung in einem Kopfteil des speziellen Datenpakets angeordnet ist, um das Ende des Sendens der Benutzerdatenpakete anzuzeigen, und
eine Benutzerdatenpaket-Sendeeinheit (1230), ausgelegt zum Senden von durch das SGW abgelieferten Benutzerdatenpaketen, die durch die Benutzerdatenpaket-Empfangseinheit (1210) empfangen werden, zu einem Benutzergerät, UE, wenn die Bestimmungseinheit (1220) spezieller Datenpakete bestimmt, dass das spezielle Datenpaket empfangen wird.

9. eNB nach Anspruch 8, wobei, wenn der eNB als Quellen-eNB arbeitet, der eNB Folgendes umfasst:
eine Einheit, ausgelegt zum Empfangen des speziellen Datenpakets von dem SGW, wobei das spezielle Datenpaket durch das SGW erzeugt wird; und
eine Einheit, ausgelegt zum Senden des speziellen Datenpakets zu einem Ziel-eNB.

10. eNB nach einem der Ansprüche 8 bis 9, wobei die Benutzerdatenpaket-Sendeeinheit (1230) ferner dafür ausgelegt ist, das spezielle Datenpaket nicht zu dem UE weiterzuleiten, wenn die Benutzerdatenpaket-Sendeeinheit (1230) die durch das SGW abgelieferten Benutzerdatenpakete zu dem UE sendet.

## Revendications

1. Procédé de réacheminement de données, dans lequel, dans un étage d'achèvement de transfert entre des noeuds B évolués, eNBs , sans implication d'un réseau central dans un réseau LTE, technologie d'évolution à long terme, le procédé comprend les étapes suivantes :
recevoir (202 ; 302), par un eNB cible, des paquets de données d'utilisateur délivrés par une passerelle de desserte, SGW, après que la SGW a effectué une commutation de chemin (201) ; et
réacheminer (204 ; 304), par l'eNB cible, les paquets de données d'utilisateur délivrés par la SGW à un équipement d'utilisateur, UE, à réception d'un paquet de données spécial avec un marqueur de fin provenant d'un eNB source,
où le paquet de données spécial ne contient pas de données d'utilisateur et le paquet de données spécial est généré par la SGW et envoyé à l'eNB source après que la SGW a effectué la commutation de chemin ;
où le marqueur de fin est défini dans un en-tête du paquet de données spécial pour indiquer la fin de l'envoi des paquets de données d'utilisateur.

2. Procédé selon la revendication 1, dans lequel, avant la réception du paquet de données spécial, le procédé comprend en outre les étapes suivantes :
recevoir (303), par l'eNB source, le paquet de données spécial depuis la SGW, où le paquet de données spécial est généré par la SGW ; et
envoyer, par l'eNB source, le paquet de données spécial à l'eNB cible.

3. Procédé selon la revendication 1, dans lequel, avant la réception du paquet de données spécial, le procédé comprend en outre les étapes suivantes :
recevoir (303), par l'eNB source, le paquet de données spécial depuis la SGW, où le paquet de données spécial est généré par la SGW ; et
régénérer (3031), par l'eNB source, un paquet de données spécial avec un marqueur de fin conformément au paquet de données spécial envoyé par la SGW, où le paquet de données spécial régénéré ne contient pas de données utilisateur et achemine un numéro de séquence PDCP d'un paquet de données d'utilisateur suivant à envoyer par l'eNB source ;
envoyer, par l'eNB source, le paquet de données spécial régénéré à l'eNB cible.

4. Procédé selon l'une quelconque des revendications 1 à 3, dans lequel lorsque l'eNB cible réachemine les paquets de données d'utilisateur délivrés par la SGW à l'UE à réception du paquet de données spécial provenant de l'eNB source, l'eNB cible ne réachemine pas le paquet de données spécial à l'UE.

5. Réseau LTE, technologie d'évolution à long terme, dans lequel le réseau LTE comprend : un équipement d'utilisateur, UE, un noeud B évolué source, eNB, un noeud B évolué cible et une passerelle de desserte, SGW, dans lequel :
l'eNB cible est configuré, dans un étage d'achèvement de transfert entre l'eNB source et l'eNB cible sans implication d'un réseau central, pour recevoir des paquets de données d'utilisateur délivrés par la SGW après que la SGW a effectué une commutation de chemin, et pour réacheminer les paquets de données d'utilisateur délivrés par la SGW à l'UE, à réception d'un paquet de données spécial avec un marqueur de fin provenant de l'eNB source ;
où le paquet de données spécial ne contient pas de données d'utilisateur et le paquet de données spécial est généré par la SGW et envoyé à l'eNB source après que la SGW a effectué la commutation de chemin ;
où le marqueur de fin est défini dans un en-tête du paquet de données spécial pour indiquer la fin de l'envoi des paquets de données d'utilisateur.

6. Réseau LTE selon la revendication 5, dans lequel
la SGW est configurée pour générer le paquet de données spécial et envoyer le paquet de données spécial à l'eNB source après que la SGW a effectué la commutation de chemin ; et
l'eNB source est configuré pour réacheminer le paquet de données spécial à l'eNB cible à réception du paquet de données spécial envoyé par la SGW.

7. Réseau LTE selon la revendication 5, dans lequel
la SGW est configurée pour générer le paquet de données spécial et envoyer le paquet de données spécial à l'eNB source après que la SGW a effectué la commutation de chemin ; et
l'eNB source est configuré pour régénérer un paquet de données spécial avec un marqueur de fin conformément au paquet de données spécial envoyé par la SGW et pour envoyer le paquet de données spécial régénéré à l'eNB cible, où le paquet de données spécial régénéré ne contient pas de paquet de données d'utilisateur et achemine un numéro de séquence PDCP d'un paquet de données d'utilisateur suivant à envoyer par l'eNB source.

8. Noeud B évolué, eNB, étant un eNB cible, dans lequel, dans un étage d'achèvement de transfert entre un eNB source et l'eNB cible, sans implication d'un réseau central dans un réseau LTE, technologie d'évolution à long terme, l'eNB comprend :
une unité de réception de paquet de données d'utilisateur (1210), configurée pour recevoir des paquets de données d'utilisateur délivrés par une passerelle de desserte, SGW ;
une unité de détermination de paquet de données spécial (1220), configurée pour déterminer si un paquet de données spécial avec un marqueur de fin est reçu de l'eNB source, où le paquet de données spécial ne contient pas de paquets de données d'utilisateur et le paquet de données spécial est généré par la SGW et envoyé à l'eNB source après que la SGW a effectué une commutation de chemin, et le marqueur de fin est défini dans un en-tête du paquet de données spécial pour indiquer la fin de l'envoi des paquets de données d'utilisateur ; et
une unité d'envoi de paquet de données d'utilisateur (1230), configurée pour envoyer des paquets de données d'utilisateur délivrés par la SGW reçus par l'unité de réception de paquets de données d'utilisateur (1210) à un équipement d'utilisateur, UE, lorsque l'unité de détermination de paquet de données spécial (1220) détermine que le paquet de données spécial est reçu.

9. eNB selon la revendication 8, dans lequel, lorsque l'eNB se comporte comme un eNB source, l'eNB comprend :
une unité configurée pour recevoir le paquet de données spécial de la SGW, où le paquet de données spécial est généré par la SGW ; et
une unité configurée pour envoyer le paquet de données spécial à un eNB cible.

10. eNB selon l'une quelconque des revendications 8 à 9, dans lequel, l'unité d'envoi de paquet de données d'utilisateur (1230) est en outre configurée pour ne pas réacheminer le paquet de données spécial à l'UE, lorsque l'unité d'envoi de paquet de données d'utilisateur (1230) envoie les paquets de données d'utilisateur délivrés par la SGW à l'UE.
